# EUROPEAN PATENT APPLICATION

(11) **EP 1 852 682 A1**
(43) Date of publication of application: **07.11.2007**
(21) Application number: 07107241.7
(22) Date of filing: 30.04.2007
(51) Int. Cl.: G01C 21/26, G09B 29/10

(54) **Map Data Processing**

(30) Priority: 02.05.2006 JP 2006128120
(71) Applicant: NISSAN MOTOR CO., LTD., Yokohama-shi, Kanagawa 221-0023 (JP)
(72) Inventor: Nomura, Takashi, Atsugi-shi Kanagawa 243-0192 (JP)
(74) Representative: Holmes, Matthew William

(57) **Abstract**

A device for processing map data. A first data unit corresponds to a map of a desired area, and a second data unit corresponds to a map of a partial area of the desired area. The first and second data units are stored on a data storage device. A controller is operable to update the second data unit, to partially update the first data unit by storing the updated second data unit in the first data unit and to store the partially updated first data unit in the data storage device.

## Description

The present invention relates generally to map data processing and particularly, but not exclusively, to a system, device and method for processing map data. Aspects of the invention relate to an apparatus, to a device, to a system, to a method and to a vehicle.

There are known devices for processing map data. For example, Japanese Laid-Open Patent Publication No. 2003-337026 discloses a map data processing device that manages and updates a map in a divisional unit. In a conventional map data processing device, map data needs to be updated in a divisional unit even when only partial road data is updated within a division. Accordingly, the efficiency of updating data is decreased as to some data contents to be updated.

It is an aim of the invention to address this issue and to improve upon known technology. Other aims and advantages of the invention will become apparent from the following description, claims and drawings.

Aspects of the invention therefore provide an apparatus, a method and a vehicle as claimed in the appended claims.

According to another aspect of the invention there is provided a device for processing map data, comprising a data storage device configured to store a first data unit corresponding to map data of a desired area and a second data unit corresponding to map data of a portion of the desired area and a processor operable to partially update the map data of the first data unit by updating to the second data unit and to store the map data that is partially updated in the first data unit.

In an embodiment, the processor is operable to partially update the map data in the first data unit by reading the first data unit from the map data storage device with reference to the map data of the second data unit.

In an embodiment, the processor is operable to determine whether the map data of the second data unit is at least one of link unit data and link row unit data and to partially update the map data of the second data unit stored in the first data unit accordingly.

In an embodiment, the processor is operable to determine whether the map data of the second data unit is at least one of polygon data unit data, poly-line data unit data, symbol data unit data and class data unit data wherein the class data unit data includes at least one of polygon data, poly-line data and symbol data, and to partially update the map data of the second data unit stored in the first data unit accordingly.

The second data unit may be at least one unit selected from a link unit, a link row unit having at least one link, a polygon data unit constituting background data, a poly-line data unit constituting the background data, a symbol data unit constituting the background data, and a class data unit having at least one of polygon data, poly-line data and symbol data.

In an embodiment, the first data unit and the second data unit each have an identification value for associating the first data unit and the second data unit with each other.

In an embodiment, the first data unit and the second data unit include expanded areas to allow for partial updating.

According to yet another aspect of the invention there is provided a system for processing map data including the device according to claim 1, the system comprising a communicating unit configured to receive data to be updated in the second data unit and to transmit the data to the device for processing map data and a server unit configured to transmit the data to be updated in the second data unit to the communicating unit.

In an embodiment, the processor is operable to partially update the map data in the first data unit by reading the first data unit from the map data storage device with reference to the map data of the second data unit.

In an embodiment, the second data unit is at least one unit selected from a link unit, a link row unit having at least one link, a polygon data unit constituting background data, a poly-line data unit constituting the background data, a symbol data unit constituting the background data, and a class data unit having at least one of polygon data, poly-line data and symbol data.

According to a further aspect of the invention there is provided a device for processing map data, comprising map data storage means for storing a first data unit corresponding to map data of a desired area and a second data unit corresponding to map data of a portion of the desired area, map data updating means for partially updating the map data of the first data unit by updating to the second data unit and processing means for storing the map data partially updated by the map data updating means in the first data unit of the map data storage means.

According to a still further aspect of the invention there is provided a method of processing map data, comprising partially updating map data of the first data unit by updating corresponding map data in a second data unit, wherein the first data unit corresponds to the map data of a desired area and the second data unit corresponding to map data of a portion of the desired area; and storing the partially updated map data in the first data unit.

The method may comprise determining whether the corresponding map data of the second data unit is at least one of link unit data and link row unit data and partially updating the corresponding map data of the second data unit stored in the first data unit in accordance with a result of determining whether the corresponding map data of the second data unit is at least one of the link unit data and the link row unit data.

The method may comprise determining whether the corresponding map data of the second data unit is at least one of polygon data unit data, poly-line data unit data, symbol data unit data and class data unit data wherein the class data unit data includes at least one of polygon data, poly-line data and symbol data and partially updating the corresponding map data of the second data unit stored in the first data unit in accordance with a result of determining whether the corresponding map data of the second data unit is at least one of the polygon data unit data, the poly-line data unit data, the symbol data unit data and the class data unit data.

The method may comprise partially updating the map data in the first data unit by reading the first data unit from the map data storage device with reference to the corresponding map data of the second data unit.

For example, a device according to one aspect of the invention may comprise a data storage device and a processor. The data storage device may be configured to store a first data unit corresponding to map data of a desired area and a second data unit corresponding to map data of a portion of the desired area. The processor may be operable to partially update the map data of the first data unit by updating to the second data unit and to store the map data that is partially updated in the first data unit.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
FIG. 1 illustrates a transfer of map data in a map data processing device constructed in accordance with a first embodiment of the invention;
FIG. 2 is a block diagram of an automotive navigation system;
FIG. 3 is a schematic diagram illustrating relationships between a level, a block and a region of map data;
FIG. 4 illustrates possible structures of a link row and a link;
FIG. 5 illustrates a road data structure controlled in a region unit;
FIG. 6 illustrates a detailed data structure of link data;
FIG. 7 is a flow chart illustrating a process performed by a control unit of a navigation system;
FIG. 8 is a flow chart illustrating a detailed process of updating road data;
FIG. 9 illustrates a background data structure controlled in a region unit;
FIG. 10 illustrates a detailed data structure of polygon data;
FIG. 11 illustrates a background region data structure including symbol · notation data;
FIG. 12 illustrates a detailed data structure of symbol · notation data;
FIG. 13 illustrates a positional relationship between a symbol and a notation when displaying a map;
FIG. 14 illustrates a process performed by a control unit of a navigation system; and
FIG. 15 is a flow chart illustrating a detailed process of updating background data.

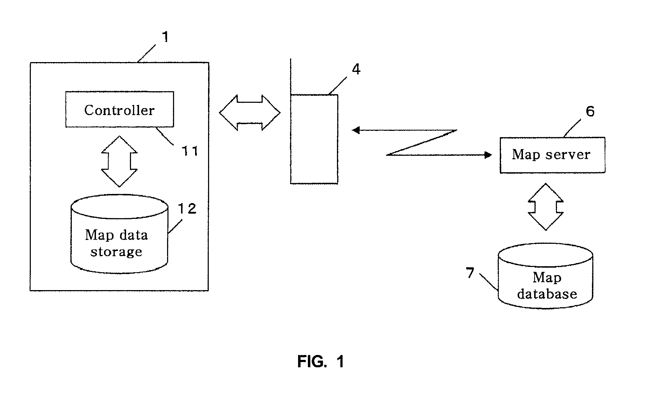

FIG. 1 illustrates a transfer of map data in a map data processing device constructed in accordance with a first embodiment of the invention. An automotive navigation system (a map data processing device) 1 reads map data from a map data storage 12. The automotive navigation system 1 receives data for updating the map data stored in the map data storage 12 from a map server 6 via a communication device 4 (e.g., a mobile phone).

The map server 6 is installed, for example, in an information center (not shown) adapted to transmit various data to the automotive navigation system 1. A map database 7 stores map data including old map data and newly-updated map data. The map server 6 can provide updated data for portions of the map data to the automotive navigation system 1 via wireless communication.

The automotive navigation system 1 comprises a controller 11 and the map data storage 12. The controller 11 comprises a microprocessor and can optionally include peripheral circuits. More specifically, the controller can be a microcomputer including a central processing unit (CPU), input and output ports (I/O), random access memory (RAM), keep alive memory (KAM), a common data bus and read only memory (ROM) as an electronic storage medium for executable programs and certain stored values as discussed hereinafter. The functions performed by controller described herein could be, for example, implemented in software as the executable programs of the microprocessor/controller 11, or could be implemented in whole or in part by separate hardware in the form of one or more integrated circuits (IC). The map data storage 12 is, for example, a hard disc drive installed in the automotive navigation system 1. However, it should be understood that the map data storage 12 may be any non-volatile memory operable to retain stored data even when the automotive navigation system 1 is not activated, including internal memory of the controller 11 where the controller is a microcomputer.

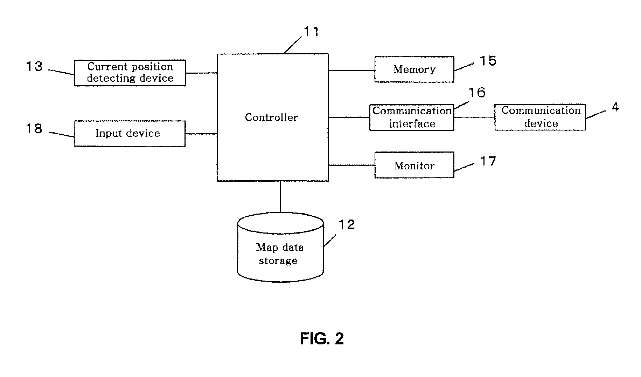

FIG. 2 is a block diagram further illustrating the automotive navigation system 1. The automotive navigation system 1 comprises the controller 11, the map data storage 12, a current position detecting device 13, memory 15, a communication interface 16, a monitor 17 and an input device 18.

The current position detecting device 13 detects the current position of a vehicle. The detecting device 13 comprises, for example, an orientation position sensor for detecting the moving orientation of a vehicle, a wheel speed sensor for detecting a vehicle speed and/or a GPS (Global Positioning System) sensor for detecting a GPS signal from a GPS satellite system.

The memory 15 stores vehicle location information detected by the current position detecting device 13. The memory 15 may also store node information or link information on a suggested route calculated by the controller 11. The memory 15 is part of the controller 11. Further, the communication interface 16 is an interface for connecting the communication device 4. Due to the communication interface 16, a mobile phone or a connection to the internet can be easily utilized as the communication device 4.

The monitor 17 is a display device for displaying a map, a suggested route and various types of information. The monitor 17 may be integrated into or separated from the body of the automotive navigation system 1. Further, the monitor 17 may be installed at a position that is distant from the automotive navigation system 1 using a cable connecting the monitor 17 and the automotive navigation system 1. The input device 18 accepts an input corresponding to the destination of a vehicle for conducting a route search. The input device 18 may be a remote controller or a touch panel screen of the monitor 17. The controller 11 performs various types of navigation processes such as a road map display, a route calculation (a route search), a route guide, etc., by using the current vehicle position information detected by the current position detecting device 13 and the map data stored in the map data storage 12. Further, various types of processing programs performed by the control device 11 are stored in ROM of the controller 11.

A data structure of the map data will now be explained in detail. The map data corresponds to map information such as road data, background data and the like. The road data is used to display a road, locate the current position of a vehicle or match with the map. The background data corresponds to data for displaying the background of a road or a road map.

The map data is managed in terms of a plurality of levels and a plurality of regions. Each level corresponds to a different display scale for the map, and map data is stored for each level at the corresponding display scale. In the present embodiment, the map data is divided into seven levels having different scales. The level of the scale for the most detailed map is Level 0, whereas that of the widest map is Level 6. However, the map data pertains to a targeted geographic area that is the same for all of the levels. That is, if Japan as a whole is the targeted geographic area, then the map data for each level describes the entirety of Japan in the scale corresponding to that level.

For example, Level 0 has the map data in 1/6250 scale of the entire Japan, while Level 1 has the map data in 1/25000 scale of the entire Japan. Level 2 has the map data in 1/100000 scale of the entire Japan, and Level 3 has the map data in 1/400000 scale of the entire Japan. Level 4 has the map data in 1/1600000 scale of the entire Japan, Level 5 has the map data in 1/6400000 scale of the entire Japan, and Level 6 has the map data in 1/128000000 scale of the entire Japan. That is, there are seven sets of map data corresponding to Levels 0 to 6. Level 0 and its vicinity are defined as a lower level, whereas Level 6 and its vicinity are defined as an upper level.

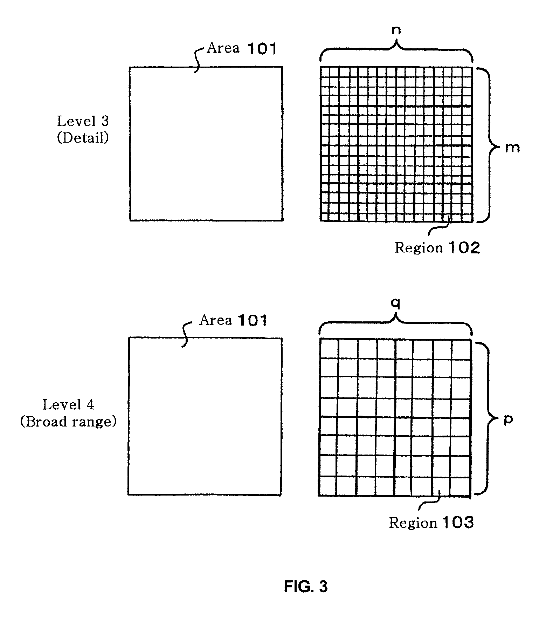

FIG. 3 is a schematic diagram illustrating the relationship between a level and a region of the map data, while showing Levels 3 and 4 as representative levels. Reference numeral 101 indicates a targeted area of the present map data. If the targeted area for the map data is the entirety of Japan, then the area 101 covers Japan as a whole. Both Level 3 and Level 4 have a targeted area in the same range. As shown in FIG. 3, the map data is divided into a plurality of rectangular areas depending on the levels. The divided rectangular area is referred to as a region. However, the region corresponds to a desired area on a map and is not limited to a specific rectangular area. In the example shown in FIG. 3, the area 101 is divided into regions 102 in an array of m by n in Level 3, while being divided into regions 103 in an array of p by q in Level 4. The region 102 indicates, for example, a town, a village, a city, etc., included in the reference numeral 101 (the area of Japan as a whole).

In Levels 3 and 4, the number of regions divided from the area 101 is different. This is because the amount of data in Level 4 (a wide map with a small scale) differs from that in Level 3 (a more detailed map with a relatively large scale). That is, each level has an appropriate division depending on the amount of data to be handled. At the same level, the size of one region is also the same.

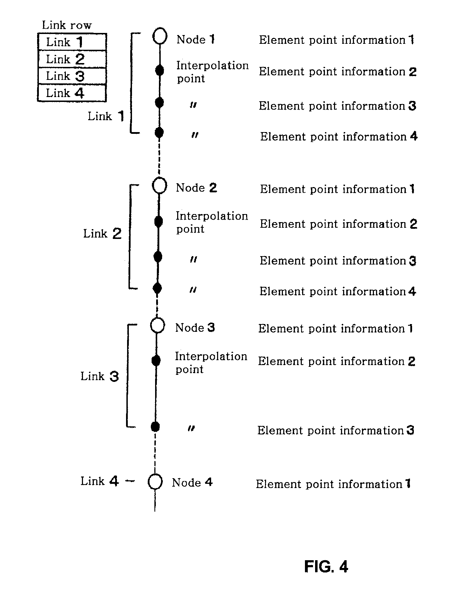

In the present embodiment, a road is indicated as a node, a link and a link row. The node refers to an intersecting point or a designated point on the road. The link corresponds to a road between adjacent nodes. The link row indicates a series of roads as a plurality of links. The position information, etc., is interpolated between the nodes by an interpolation point. FIG. 4 illustrates an example of a structure for the link row and links wherein the link row comprises four links.

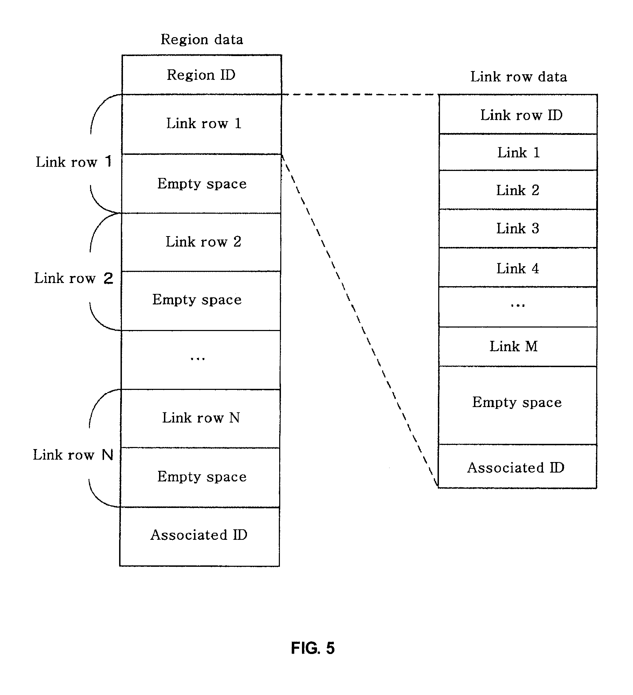

In the data processing device, the road data in the map data stored in the map data storage 12 is in the form of a relational database managed by dividing the map data into a plurality of region data units that contain the road data for a particular region. FIG. 5 illustrates the structure of the region data unit for a particular region as stored in the map data storage 12.

Each region data unit includes a unique region ID, a plurality of link row data units corresponding to link rows contained in the region and an associated identification value (ID). The region ID includes at least data that indicates that the region data unit defines a region, as well as data for specifying the region. The associated ID includes a region ID for associating with another region.

In an example shown in FIG. 5, the data of a link row 1, a link row 2, ... , a link row N (N is a natural number equal to or greater than 3) is contained in one region data. As explained below, since link data units can be added to or deleted from the region data in a link row data unit, there is empty data space between each link row data unit in order to add additional link data units.

Each link row data unit includes a unique link row ID, a plurality of the link data units constituting the link row and an associated ID. The link row ID includes at least data that indicates that the link row data unit represents a link row, as well as data for specifying the link row. In an example shown in FIG. 5, the link row data values representing a link 1, a link 2, a link N (N is a natural number equal to or greater than 5) is contained in the link row data unit for link row 1. As explained below, since link data units can be added to or deleted from the region data in a link row data unit, there is an empty data space to allow for the addition of link data units. The associated ID of the link row data unit includes a link row ID, a link ID, a node ID, a region ID, etc., for associating with another link row, link, node, region, etc.

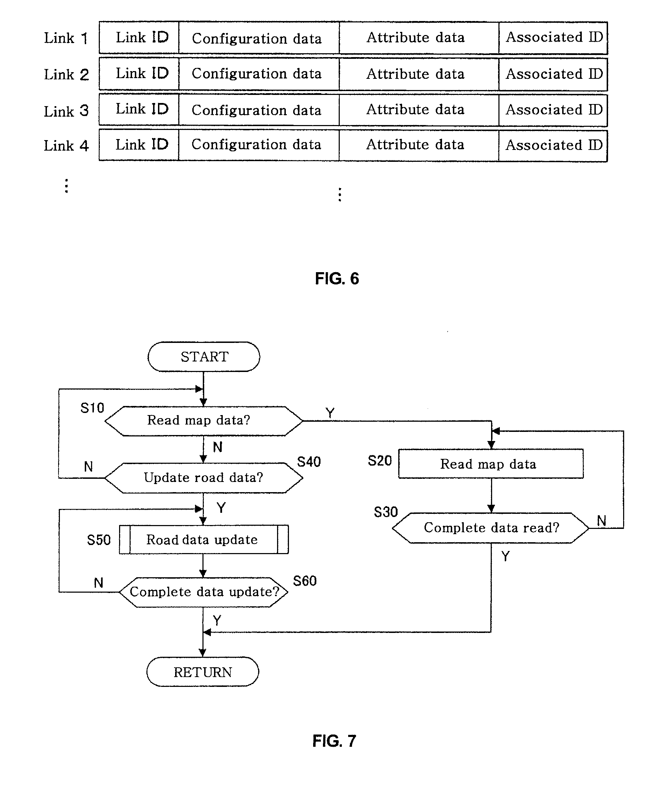

FIG. 6 illustrates a detailed data structure of the link data units. Each link data unit includes a link ID, configuration data, attribute data and an associated ID. That is, one record comprises the link ID, the configuration data, the attribute data and the associated ID.

The link ID includes at least data that indicates that the link data unit represents a link, as well as data for specifying the link. The configuration data includes coordinate data of a node constituting the link and coordinate data of an interpolating point. The attribute data includes attribute information of the link such as the width, speed limit, road name, number of lanes and traffic regulations (e.g., one-way traffic) for the link. The associated ID includes data such as an ID of the node associated with the link, an ID of the link row including the link and an ID of the region including the link.

Further, although the manner in which the region data, the link row data and the link data is arranged is described in detail herein, it should be appreciated that the exact manner in which the data stored in the map data storage 12 is arranged is not important or significant.

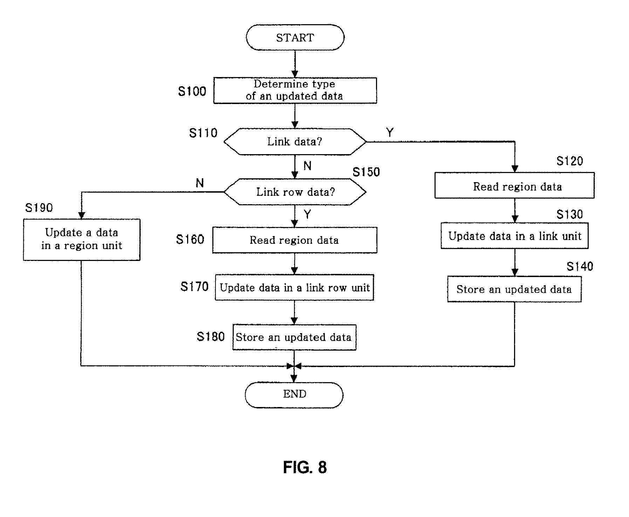

In the map data processing device, the road data managed in a region unit can be partially updated in a link unit, a link row unit or a region unit. The map server 6 transmits updated road data to the automotive navigation system 1. For example, when an updated portion of the data is a link, a link data is transmitted. Further, when the updated portion of the data is a link row, a link row data is transmitted. In addition, when the updated portion covers a wide range, region data is transmitted. Also, when data is deleted, the map server transmits instructional data to delete such data while designating the ID of the link, link row or region to be deleted. Further, when data is updated, processes for deleting old data and adding new data are performed. That is, the instructional data of adding the new data and deleting the old data is transmitted to the automotive navigation system 1. A method of partially updating data for a road (i.e., road data) is explained below in view of FIGS. 7 and 8.

FIG. 7 is a flow chart illustrating a process performed by the controller 11 of the automotive navigation system 1. When the automotive navigation system 1 is activated, the controller 11 starts the process at step S10. In step S10, it is determined whether the instruction to read map data is present or not. For example, when a user instructs display of a map on the monitor 17 by using the input device 18, it is determined that the instruction to read map data is present. If the instruction is present, then the process proceeds to step S20. If the instruction is not present, then the process proceeds to step S40.

In step S20, map data required by a user is read from the map data storage 12. As explained above, since the map data stored in the map data storage 12 is managed in a region unit, the map data is also read in the region unit. For example, a plurality of region data in a desired region surrounding the user's own vehicle is read. A map based on the read map data is displayed on the monitor 17. The reading rate of the map data and the display rate of the map can be performed faster by reading the map data in a region unit rather than in a link unit or a link row unit.

In step S30 following step S20, it is determined whether the process of reading the map data is completed or not. If reading the map data is not completed, then the process returns to step S20 to continue the process of reading the map data. If reading the map data is completed, then the process returns to step S10.

In step S40, it is determined whether an instruction to update road data of the map data is present or not. When the data to be updated is transmitted from the map server 6, it is determined that an instruction for updating the road data is present. If an instruction to update data is not present, then the process returns to step S10. If an instruction for updating the map data is present, then the process returns to step S50.

In step S50, the updating process for the road data is performed. The updating process for the road data is explained below in view of FIG. 8. In step S60, which follows step S50, it is determined whether the updating process is completed or not. If it is determined that the updating process is completed, then the process returns to step S50. If it is determined that the updating process is not completed, then the process returns to step S10.

FIG. 8 is a flow chart illustrating the updating process for the road data. Further, this updating process is performed at every level of the map data. As explained above, seven map data levels (Levels 0 to 6) are stored in the map data storage 12 in this example. Updating data according to each level of the map data is transmitted from the map server 6. Hereinafter, a method of updating the road data in one particular level is explained. However, it should be noted that the same method applies to the other levels as well.

In step S100 the type of road data transmitted from the map server 6 is determined. In certain embodiments of the invention, it is assessed whether the transmitted road data is a link data, a link row data or a region data with reference to an ID contained in the road data. After determining the type of road data, the process advances to step S110.

In step S110 it is determined whether the road data received from the map server 6 is link data with reference to the process performed in step S100. If the received road data is link data, then the process advances to step S120, where region data corresponding to the link data is read from the map data storage 12 with reference to an associated ID of the link data received from the map server 6. The process then proceeds to step S130.

In step 130 the content of the region data read from the map data storage 12 is updated with reference to the link data received from the map server 6. For example, when link data to be added is transmitted from the map server 6, the received link data is stored in empty data space. Specifically, the link data is stored in the data space of a link row including the link with reference to an associated ID of the link data. Further, when the data received from the map server 6 includes an instruction for deleting link data, a process of deleting the instructed link data is performed.

As explained above, when changing the contents of the link data, instruction data for adding new link data and deleting old link data is transmitted from the map server 6. Thus, a process for deleting the instructed link data is performed together with a process for adding new link data.

In step S140, which follows step S130, region data having the updated contents is stored in the map data storage 12. By doing so, road data can be stored once again in the map data storage 12 in a region unit.

In contrast, in step S110 if it is determined that the road data received from the map server 6 is not link data, then the process proceeds to step S150. In step S150 it is determined whether the road data received from the map server 6 is link row data or not. If the received road data is link row data, then the process proceeds to step S160.

In step S160 region data corresponding to the link row is read from the map data storage 12 with reference to an associated ID of the link row data received from the map server 6. The process then proceeds to step S170 where region data read from the map data storage 12 is updated with reference to the link row data received from the map server 6. For example, when link row data to be added is transmitted from the map server 6, the received link row data is stored in empty data space. Further, when the data received from the map server 6 includes an instruction for deleting link row data, a process of deleting the instructed link row data is performed. When the contents of the link row data are updated, processes for deleting old link row data and adding new link row data are performed, similar to the updating process for the link data.

In step S180 following step S170, updated region data is stored in the map data storage 12. By doing so, road data can be stored once again in the map data storage 12 in a region unit.

Alternatively, if it is determined in step S150 that the road data received from the map server 6 is not link row data, then the process proceeds to step S190. In such a case, the road data received from the map server 6 is region data. In step S190, region data stored in the map data storage 12 is updated based on the region data received from the map server 6. For example, when region data to be added is transmitted from the map server 6, the received region data is stored in empty data space. Further, when the data received from the map server 6 includes an instruction for deleting region data, a process of deleting the instructed region data is performed. When the contents of the region data are updated, processes for deleting old region data and adding new region data are performed, similar to the process for updating the link data or the link row data. In such a case, road data can be stored once again in the map data storage 12 in a region unit.

According to the map data processing device constructed in accordance with the first embodiment of the invention, map data stored in the map data storage 12 in a region unit (a first data unit) is partially updated in a link unit or a link row unit (a second data unit), which is smaller than a region unit. The partially updated map data is stored once again in the map data storage 12 in a region unit (a first data unit). Since the road data can be read in a region unit by storing the road data in the map data storage 12 in a region unit, the rate of reading the data (i.e., the rate of displaying the map) can be increased. Further, since the road data can be updated in a link unit or a link row unit, which is smaller than the region unit, the efficiency of updating the data can be improved. That is, when an updated portion of the data is a link or a link row, there is no need to perform an unnecessary data updating in a region unit. Also, when an updated data is received from the information center via wireless communication, the costs of communication can be reduced by updating the data in a small-sized data unit such as a link unit or a link row unit.

In the first embodiment, the road data managed in a region unit is updated in a link unit, a link row unit or a region unit. Such data is then stored in the map data storage 12 in a region unit. In a second embodiment, background data for displaying a map stored in the map data storage 12 in the region unit is updated in a polygon · poly-line data unit, a symbol · notation data unit, a class data unit and a region unit. Then, the updated data is stored once again in the map data storage 12 in the region unit. Further, the background data is in the form of a relational database, which is stored in the map data storage 12.

The background data includes polygon data or poly-line data in order to display a mountain, a sea, a railway, a park, a facility, etc. The polygon data corresponds to data indicating a closed area such as a park. The poly-line data refers to data indicating a linear object such as a railway. The class data corresponds to data indicating the integration of a plurality of polygon data or poly-line data (i.e., a shoreline, river, etc.). As explained above, the region is a unit for indicating a desired area. Here, the regions of the first and second embodiments of the invention are the same.

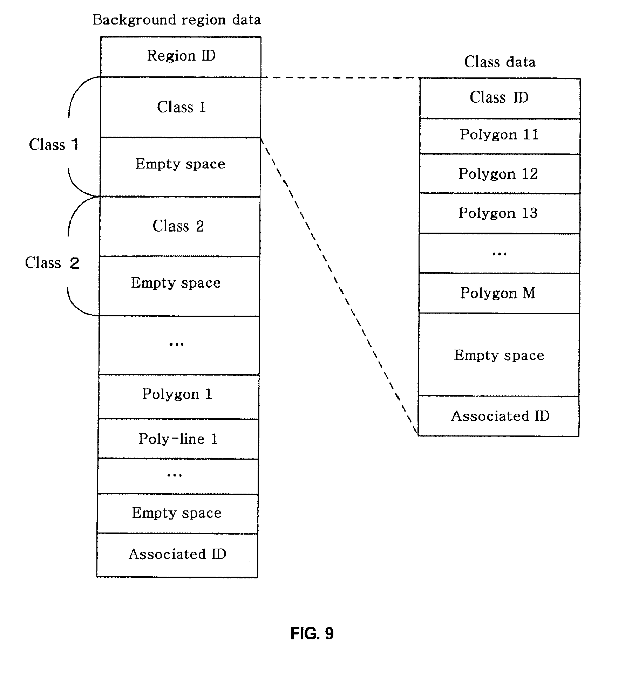

FIG. 9 illustrates a structure of the background data managed in a region unit. The background data managed in the region unit is referred to as background region data. Each background region data includes a unique region ID, a plurality of class data included in the region, the polygon data · poly-line data and an associated ID. The region ID includes at least data that indicates that the data is a region, as well as data for specifying the region. The associated ID includes a region ID for associating with another region.

As shown in FIG. 9, one background region data includes a plurality of class data or polygon data · poly-line data. Since the data can be added to or deleted from the background region data in a class data unit, there is empty data space between each class data in order to add data for another class. Further, since the data can be also added to or deleted from the background region data in a polygon unit or a poly-line unit, empty data space is also provided to add polygon data or poly-line data.

Each class data includes a unique class ID, the polygon data · poly-line data constituting the class data and an associated ID. The class ID includes at least data that indicates that the data is class data, as well as data for specifying the class. In the class data, there is also provided empty data space in order to add the polygon data or the poly-line data. The associated ID includes an ID for relating to other data such as a background region data.

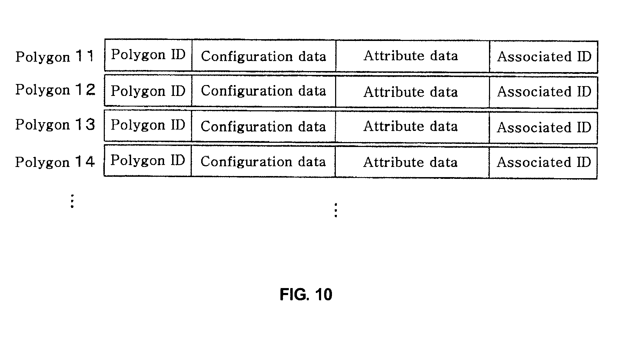

FIG. 10 illustrates a detailed data structure of the polygon data. Each polygon data includes a unique polygon ID, configuration data, attribute data and an associated ID. The polygon ID includes at least data that indicates that the data is a polygon, as well as data for specifying the polygon.

The configuration data includes a configuration element point data constituting the polygon. The attribute data includes attribute information of the polygon. For example, if the polygon is a park, then the attribute data may include the name of the park. The associated ID includes data such as a link ID associated with the polygon, a class ID including the polygon, a region ID including the polygon, etc. Although FIG. 10 illustrates the data structure of the polygon data, it should be noted that the data structure of the poly-line data is the same.

The background data also includes symbol · notation data for displaying various marks indicating such features as a school or a post office. When displaying a map, the names of the marks (e.g., US Post Office) are also displayed together with the marks. Such a name is referred to as a "notation."

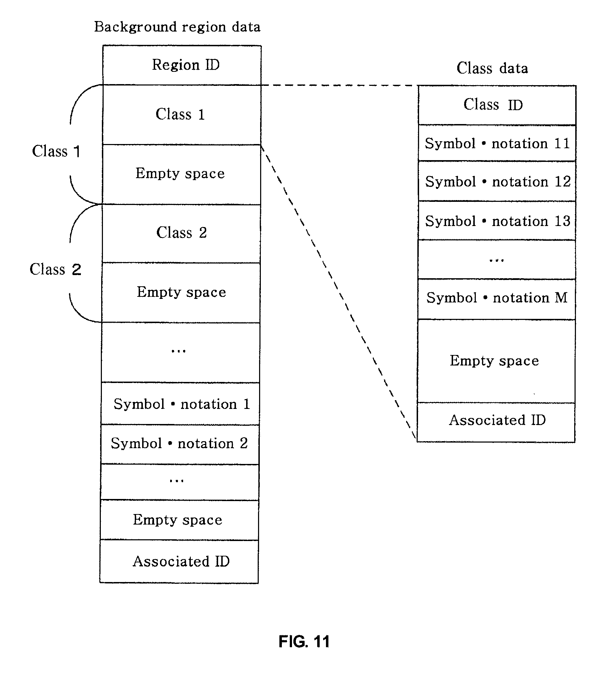

FIG. 11 illustrates a possible structure of the background region data including the symbol · notation data. Such background region data includes a unique region ID in every region, a plurality of class data included in the region, the symbol · notation data and an associated ID. Each class data includes a unique class ID, the symbol · notation data constituting the class data and the associated ID. In such a case the class is, for example, the name of a facility. If the class is a post office, then numerous symbol · notation data of the post office are included in the class data of the post office.

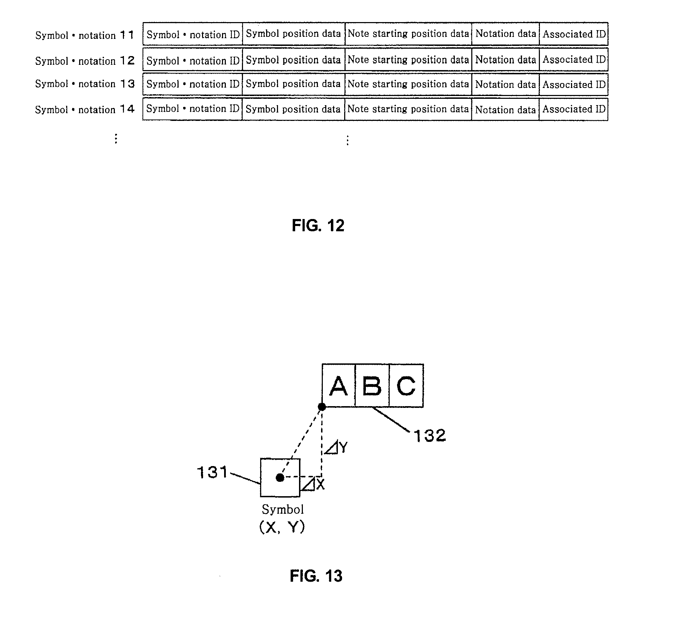

FIG. 12 illustrates a detailed data structure of the symbol · notation data. Each symbol · notation data includes a unique symbol · notation ID, symbol position data, note starting position data, notation data and an associated ID. The symbol · notation ID includes at least data indicating that the data represents a symbol · notation, as well as data for specifying the symbol. The symbol position data indicates the positional coordinate of the symbol. The note starting position data indicates the positional coordinate of the notation. As explained above, the notation data refers to a notation to be displayed near the symbol, such as the name of the symbol (e.g., US Post Office).

FIG. 13 illustrates the positional relationship between a mark and a notation to be displayed when displaying a map. The position of a mark (or symbol) 131 is determined with reference to the symbol position data. The position of a notation 132 is determined with reference to the note starting position data. For example, when the symbol position data is (X, Y) and the note starting position data is (ΔX, ΔY), the mark 131 is displayed in a position of (X, Y) on the map and the notation 132 is displayed in a position of (X + ΔX, Y + ΔY) on the map.

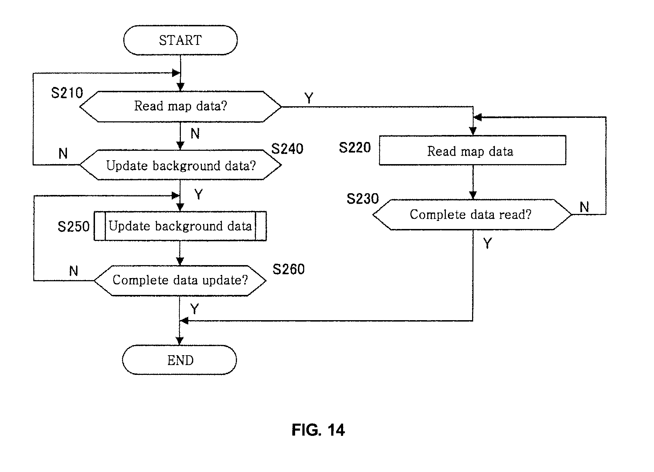

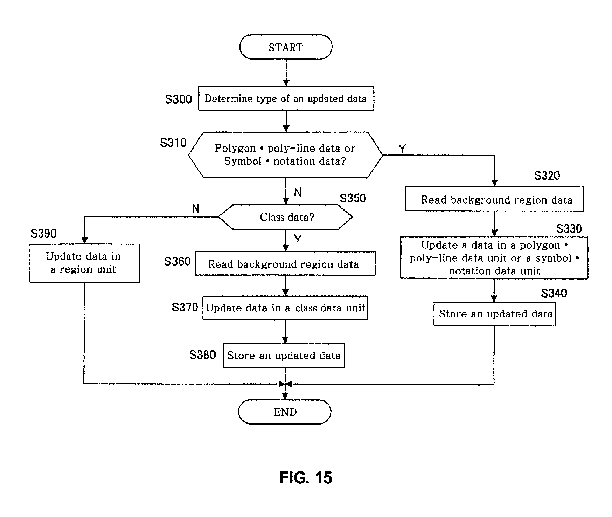

In the map data processing device of the second embodiment, the background data stored in the data storage 12 in a region unit can be partially updated in a polygon · poly-line data unit, a symbol · notation data unit, a class data unit and a region unit. The map server 6 transmits updated background data to the automotive navigation system 1. For example, when an updated portion of the data is polygon data, the map server 6 transmits the polygon data to be updated. When an updated portion of the data is class data, the map server 6 transmits the class data to be updated. Further, when the background data within the specific region is updated, the map server 6 transmits the background region data to be updated. Also, when the background data is deleted, the map server 6 transmits instruction data to delete such data while designating the ID of the polygon · poly-line data, the symbol · notation data, the class data or the region data to be deleted. Further, when the contents of the background data are updated, processes for deleting old background data and adding new background data are performed similar to the road data updating process. A method of partially updating the background data is explained below in view of FIGS. 14 and 15.

FIG. 14 is a flow chart illustrating a process performed by the controller 11 of the automotive navigation system 1. When the automotive navigation system 1 is activated, the controller 11 starts the process at step S210 where it is determined whether an instruction to read the map data is present or not. For example, if a user instructs the map to be displayed on the monitor 17 by using the input device 18, then it is determined that the instruction is present. If the instruction is present, then the process proceeds to step S220. If the instruction is not present, then the process proceeds to step S240.

In step S220 map data from the map data storage 22 is read to display the map on the monitor 17. As mentioned above, since the map data stored in the map data storage 12 is managed in a region unit, the map data to be displayed on the monitor 17 is also read in a region unit. The monitor 17 displays the map with reference to the read map data. The data reading rate and the map displaying rate can be made faster by reading the map data in a region unit rather than in a symbol · notation data unit.

In step S230 following step S220, it is determined whether the process of reading the map data is completed or not. If the reading process is not completed, then the process returns to step S220 in order to continue reading the map data. If the reading process is completed, then the process returns to step S210.

In step S240 it is determined whether an instruction for updating the background data of the map data is present or not. When the background data to be updated is transmitted from the map server 6, it is determined that the instruction for updating the background data is present. If the instruction for updating the background data is not present, then the process returns to step S210. If the instruction for updating the background data is present, then the process advances to step S250.

In step S250, an updating process for the background data is performed. The updating process for the background data is explained below in view of FIG. 15. In step S260, which follows step S250, it is determined whether the updating process for the background data is completed or not. If the updating process is not completed, then the process returns to step S250. If the updating process is completed, then the process returns to step S210.

FIG. 15 is a flow chart illustrating the updating process for the background data. As mentioned in the previous example above, seven map data levels (Levels 0 to 6) are stored in the map data storage 12. The updating data corresponding to each level of the map data is transmitted from the map sever 6. The updating method at one particular level of the background data is explained below. However, it should be noted that such a method can be also applied to the other levels of the background data.

In step S300 the type of background data transmitted from the map server 6 is determined. In this embodiment, it is assessed whether the received background data is polygon data · poly-line data, class data or background region data with reference to the ID contained in the background data. After determining the type of background data, the process proceeds to step S310.

In step S310 it is determined whether the background data received from the map server is polygon data · poly-line data or symbol · notation data with reference to the process performed in step S300. If the received data is polygon data · poly-line data or symbol · notation data, then the process proceeds to step S320 where the background region data from the map data storage 12 is read. The background region data corresponding to the received background data received from the map server 6 is read with reference to the associated ID of the received background data. After the background region data is read, the process proceeds to step S330.

In step S330 the background region data read from the map data storage 12 is updated in a polygon · poly-line data unit or a symbol · notation data unit with reference to the background data received from the map server 6. For example, when polygon data to be added is transmitted from the map server 6, the received polygon data is stored in an empty data space. Specifically, when the class ID is contained in the associated ID of the polygon data, it is stored in the class data space corresponding to the class ID. When an instruction for deleting polygon data is contained in the data received from the map server 6, the process of deleting the instructed polygon data is performed. When changing the contents of the polygon data, a process of deleting the instructed old polygon data is performed together with a process of adding new polygon data. The processes of adding, deleting and updating the poly-line data and the symbol · notation data are performed in a similar manner.

In step S340 following step S330, the updated background region data is stored in the map data storage 12. By doing so, the background data can be stored once again in the map data storage 12 in a region unit.

Alternatively, if it is determined that the background data received from the map server 6 is not polygon data · poly-line data or symbol · notation data in step S310, then the process proceeds to step S350. In step S350 it is determined whether the background data received from the map server 6 is class data or not. If the received data is class data, then the process proceeds to step S360.

In step S360 the background region data from the map data storage 12 is read. Here, the background region data corresponding to the class data received from the map server 6 is read with reference to the associated ID of the class data. After the background region data is read, the process proceeds to step S370. In step S370, the background region data read from the map data storage 12 is updated in a class data unit. The processes of adding, deleting and updating the class data are identical to those of adding, deleting and updating the polygon data · poly-line data or the symbol · notation data.

In step S380, which follows step S370, the updated background region data is stored in the map data storage 12. By doing so, the background data can be stored once again in the map data storage 12 in a region unit.

Further, if it is determined in step S350 that the background data received from the map server 6 is not class data, then the process proceeds to step S390. In such a case, the background data received from the map server 6 is region data. In step S390, the background region data stored in the map data storage 12 is updated based on the background region data received from the map server 6. The processes of adding, deleting and updating the background region data are identical to those of adding, deleting and updating the region data performed by the map data processing device of the first embodiment. In such a case, the background data can be stored once again in the map data storage 12 in a region unit.

In the second embodiment, the map data stored in the map data storage 12 in a first data unit is partially updated in a second data unit, which is smaller than the first data unit. The partially updated map data is stored once again in the map data storage 12 in the first data unit. Particularly, in the second embodiment, the background data contained in the map data stored in the map data storage 12 in a region unit is updated in a polygon data · poly-line data unit, a symbol · notation data unit or a class data unit, which is smaller than a region unit. Therefore, it is possible to improve the efficiency of updating data. In other words, when the data to be updated is polygon data · poly-line data, symbol · notation data or class data, there is no need to perform any unnecessary data updating in a region unit. Further, when the updated background data is received from the information center via wireless communication, the costs of communication can be reduced by updating the data in a small-sized data unit such as that for polygon data · poly-line data, symbol · notation data or class data.

The invention is not limited to the embodiments mentioned above. While it is explained that a data for updating the map data is wirelessly transmitted from the map server 6 to the automotive navigation system 1 in order to update the map data stored in the map data storage 12, the method of updating the map data is certainly not limited thereto. For example, the data for updating the map data may be provided via storage such as a removable memory to the automotive navigation system 1. Further, the map data can be updated by an external terminal (personal computer), which is wire-connected to the automotive navigation system 1.

In the embodiments of the invention, the square area in which the map data is divided is referred to as the region. However, the term "region" is used for convenience and the invention is certainly not limited by such a term. The region is not limited to the square area and can be set to a village, a town, a city, etc.

The updated unit of the map data is not limited to the link unit, the link row unit, the polygon · poly-line data unit, the symbol · notation data unit and the class data unit, as explained above. Further, the data unit stored in the map data storage 12 is not limited to the region unit, as explained above. That is, each data unit is not limited to the above-mentioned data unit so long as the map data stored in the map data storage 12 in the first data unit is partially updated in the second data unit, which is smaller than the first data unit. Then, the partially updated map data is stored once again in the map data storage 12 in the first data unit.

In the embodiments described above, the road data or the background data is stored in the map data storage 12 in the form of a relational database. However, it should be noted that the database format is certainly not limited to the relational database.

In step S10 shown in FIG. 7, when a user instructs display of the map on the monitor 17 by using the input device 18, it is determined whether the instruction for reading the map data is present or not. However, the instruction for reading the map data is certainly not limited to the instruction for displaying the map. Alternatively, it can be an instruction for searching a route or guiding a path.

While it is explained that the map data storage 12 is included in the automotive navigation system 1, the invention is not limited in this manner, and the map data storage 12 may be included in a portable navigation system or other devices such as a personal computer.

Accordingly, the above-described embodiments have been described in order to allow easy understanding of the present invention and do not limit the present invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application No. 2006-128120, filed 2nd May 2006, the contents of which are expressly incorporated herein by reference.

## Claims

1. An apparatus for processing map data, comprising:
data storage means for storing a first data unit corresponding to map data of a predetermined area and a second data unit corresponding to map data of a portion of the predetermined area; and
processor means for partially updating the map data of the first data unit with the second data unit and to store the partially updated map data in the first data unit.

2. An apparatus as claimed in claim 1 wherein the processor means is arranged to partially update the map data in the first data unit by reading the first data unit from the data storage means with reference to the map data of the second data unit.

3. An apparatus as claimed in claim 1 or claim 2 wherein the second data unit is at least one unit selected from a link unit, a link row unit having at least one link, a polygon data unit constituting background data, a poly-line data unit constituting the background data, a symbol data unit constituting the background data, and a class data unit having at least one of polygon data, poly-line data and symbol data.

4. An apparatus as claimed in any preceding claim wherein the first data unit and the second data unit each have an identification value for associating the first data unit and the second data unit with each other.

5. An apparatus as claimed in any preceding claim wherein the first data unit and the second data unit include expanded areas to allow for partial updating.

6. An apparatus as claimed in any preceding claim wherein the processor means is arranged to determine whether the map data of the second data unit is at least one of link unit data and link row unit data and to partially update the map data of the second data unit stored in the first data unit accordingly.

7. An apparatus as claimed in any preceding claim wherein the processor means is arranged to determine whether the map data of the second data unit is at least one of polygon data unit data, poly-line data unit data, symbol data unit data and class data unit data wherein the class data unit data includes at least one of polygon data, poly-line data and symbol data, and to partially update the map data of the second data unit stored in the first data unit accordingly.

8. A system for processing map data, comprising:
an apparatus as claimed in any preceding claim;
communication means for receiving data to be updated in the second data unit and for transmitting the data to the apparatus for processing map data; and
server means for transmitting the data to be updated in the second data unit to the communication means.

9. A method of processing map data, comprising:
partially updating map data of a first data unit by updating corresponding map data in a second data unit, wherein the first data unit corresponds to map data of a predetermined area and the second data unit corresponding to map data of a portion of the predetermined area; and
storing the partially updated map data in the first data unit.

10. A method as claimed in claim 9 comprising:
determining whether the corresponding map data of the second data unit is at least one of link unit data and link row unit data; and
partially updating the corresponding map data of the second data unit stored in the first data unit in accordance with a result of determining whether the corresponding map data of the second data unit is at least one of the link unit data and the link row unit data.

11. A method as claimed in claim 9 or claim 10 comprising:
determining whether the corresponding map data of the second data unit is at least one of polygon data unit data, poly-line data unit data, symbol data unit data and class data unit data wherein the class data unit data includes at least one of polygon data, poly-line data and symbol data; and
partially updating the corresponding map data of the second data unit stored in the first data unit in accordance with a result of determining whether the corresponding map data of the second data unit is at least one of the polygon data unit data, the poly-line data unit data, the symbol data unit data and the class data unit data.

12. A method as claimed in any of claims 9 to 11 comprising partially updating the map data in the first data unit by reading the first data unit from the map data storage device with reference to the corresponding map data of the second data unit.

13. A vehicle having an apparatus or a system or adapted to use a method as claimed in any preceding claim.
